# EUROPÄISCHE PATENTSCHRIFT

(11) **EP 2 689 147 B1**
(45) Veröffentlichungstag und Bekanntmachung des Hinweises auf die Patenterteilung: **20.05.2015**
(21) Anmeldenummer: 12703844.6
(22) Anmeldetag: 16.02.2012
(51) Int. Cl.: F16B 13/06

(54) **SPREIZDÜBEL**
EXPANSION ANCHOR
CHEVILLE À EXPANSION

(30) Priorität: 23.03.2011 DE 102011005999
(43) Veröffentlichungstag der Anmeldung: 29.01.2014
(73) Patentinhaber: HILTI Aktiengesellschaft, 9494 Schaan (LI)
(72) Erfinder: WISSLING, Matthias, CH-9000 St. Gallen (CH)
(74) Vertreter: Hilti Aktiengesellschaft Corporate Intellectual Property
(86) Internationale Anmeldenummer: PCT/EP2012/052669
(87) Internationale Veröffentlichungsnummer: WO 2012/126681

(56) Entgegenhaltungen:
- EP-A1- 0 627 567
- EP-A1- 0 724 085
- EP-A1- 1 243 801
- GB-A- 2 151 739

## Beschreibung

Die vorliegende Erfindung betrifft einen Spreizdübel gemäß dem Oberbegriff des Anspruches 1.

Spreizdübel mit einem Ankerbolzen, einem Spreizkörper, Angriffsmitteln sowie eine den Ankerbolzen umgebende Spreizhülse dienen dazu, Werkstücke an einem Bauteil zu befestigen. Hierzu wird in das Bauteil, z. B. eine Betonwand oder eine Betondecke, eine Bohrung eingearbeitet und anschließend der Spreizdübel in die Bohrung eingeschoben. Mit den Angriffsmitteln wird der konische Spreizkörper an dem Ankerbolzen bewegt, so dass dadurch der Spreizkörper die Spreizhülse radial nach außen drückt und eine Verankerung des Spreizdübels aufgrund von radialen Kräften zwischen der Spreizhülse bzw. dem Spreizkörper und dem Bauteil, z. B. dem Beton an der Bohrung, besteht. Dadurch können Werkstücke oder Gegenstände an dem Spreizdübel befestigt werden.

Zwischen der Spreizhülse und der Bohrlochwandung an dem Bauteil bewirkt somit eine Reibkraft zwischen der Bohrlochwandung und der Spreizhülse eine Verankerung des Spreizdübels. Die konischen Spreizkörper sind rotationssymmetrisch zu einer Längsachse des Ankerbolzens bzw. des Spreizkörpers ausgebildet.

Die DE 41 16 149 A1 zeigt einen Spreizdübel mit Ankerbolzen, dessen zylindrischer Schaft in einem Endbereich in Setzrichtung eine Erweitung aufweist und an dem dieser Erweiterung abgewandten Ende Angriffsmittel zur Lastaufnahme trägt, wobei der Ankerbolzen zumindest entlang eines Teils seines Schaftes von einer relativ dazu verschiebbaren Spreizhülse umgeben ist, die wenigstens einen zum setzungsseitigen Ende hin offenen Längsschlitz aufweist und an ihrer Außenkontur mit radial abstehenden Vorsprüngen versehen ist.

EP 724 085 A zeigt einen Spreizdübel gemäß dem Oberbegriff vom Anspruch 1.

Die Aufgabe der vorliegenden Erfindung besteht deshalb darin, einen Spreizdübel zur Verfügung zu stellen, bei dem eine gute Verbindung zwischen der Spreizhülse und dem Beton bei geringen Herstellungskosten des Spreizdübels besteht.

Diese Aufgabe wird gelöst mit einem Spreizdübel gemäß Anspruch 1, umfassend u.a. einen Ankerbolzen mit einem Spreizkörper an einem ersten Endabschnitt des Ankerbolzens mit einer Längsachse, wenigstens ein Angriffsmittel an einem anderen zweiten Endabschnitt des Ankerbolzens zur Lastaufnahme, eine den Ankerbolzen umgebende Spreizhülse, wobei der Spreizkörper an der radialen Außenseite unterschiedliche Abstände bezüglich wenigstens eines identischen Punktes an der Längsachse zu der Längsachse an einer Übergangszone aufweist.

Der Spreizkörper des Ankerbolzens weist somit keine rotationssymmetrische Geometrie bezüglich der Längsachse des Ankerbolzens auf. Verglichen mit einer rotationssymmetrischen Geometrie wird nach der Erfindung zum einen die Tendenz des Konus reduziert, beim Einschlagen in das Bohrloch das Bohrloch zu beschädigen, so dass erfindungsgemäß die Setzenergie und insbesondere die Zahl der Hammerschläge reduziert werden kann. Zudem wird durch die Auslegung der Konusform entsprechend der Erfindung ein Mitdrehen des Bolzens beim Aufbringen des Installationsdrehmomentes reduziert. Beim Aufspreizen bzw. radialen Aufbiegen der Spreizhülse mit dem Spreizkörper treten zum anderen in tangentialer Richtung an dem Spreizkörper unterschiedliche Verformungen bzw. Dehnungen der Spreizhülse auf. Dadurch kann sich die Spreizhülse bzw. der Spreizkörper punktuell mit einer sehr großen Druckkraft an einer Bohrlochwandung in einem Bauteil verkrallen bzw. verspreizen, so dass dadurch besonders große Kräfte von dem Spreizdübel aufgenommen werden können. Fertigungsungenauigkeiten haben aufgrund dieser Geometrie des Spreizkörpers nur einen sehr geringen Einfluss auf die von dem Spreizdübel an der Bohrlochwandung übertragbaren Kräfte, so dass eine geringere Fertigungsgenauigkeit bei der Herstellung des Spreizkörpers ausreichend ist und somit Kosten bei der Herstellung eingespart werden können.

Insbesondere ist zumindest die Übergangszone wellen- oder zackenförmig, z. B. mit wenigstens 3, 4 oder 7, vorzugsweise 7 bis 9, Wellen oder Zacken, ausgebildet und/oder unterscheiden sich die Abstände bezüglich des wenigstens einen Punktes zu der Längsachse um wenigstens 1%, 2%, 3%, 4%, 5%, 10%, 15% oder 20%. Die Wellen sind vorzugsweise an ihren radial aussenliegenden Wellenbergen durch Radien abgerundet. Die Zacken können demgegenüber winklig ausgeführt sein.

In einer weiteren Ausgestaltung nimmt die wellen- oder zackenförmige Übergangszone in axialer Richtung nur einen Teilbereich des Spreizkörpers ein. Alternativ kann der gesamte Spreizkörper mit Wellen bzw. Zacken ausgebildet sein.

Zweckmäßigerweise weist der Spreizkörper, insbesondere außerhalb der Übergangszone, eine konische Geometrie auf.

In einer ergänzenden Ausführungsform ist die Übergangszone im Wesentlichen zylinderförmig ausgebildet und eine Längsachse des Zylinders ist koaxial zu der Längsachse des Ankerbolzens ausgerichtet. Aufgrund der zylinderförmigen Übergangszone ist der Spreizkörper an der Übergangszone nicht konisch ausgebildet. Beim Aufspreizen der Spreizhülse mit dem Spreizkörper wird somit zunächst die Spreizhülse an dem konischen Spreizkörper außerhalb der Übergangszone radial aufgespreizt und erst im Bereich eines ersten hinteren Endes des Ankerbolzens tritt die Übergangszone auf. Am Beginn der Übergangszone treten aufgrund der wellen- oder zackenförmigen Geometrie der Übergangszone sowie auch an der Übergangszone unterschiedliche Abstände zu der Längsachse an der Übergangszone auf. Dadurch wird am Ende des Spreizvorganges die Spreizhülse unterschiedlich weit radial aufgespreizt. Es kann eine besonders effektive Verankerung der Spreizhülse bzw. des Spreizkörpers in einer Bohrlochwandung eines Bauteiles, z. B. einer Betonwand oder einer Betondecke, erfolgen. Dadurch können besonders große Reibkräfte übertragen werden aufgrund der punktuell auftretenden großen Druckkräfte und ferner ist auch eine formschlüssige Verankerung der Spreizhülse und/oder des Spreizkörpers in der Bohrlochwandung möglich.

Alternativ kann vorgesehen sein, dass die Übergangszone im Wesentlichen konisch ausgebildet ist, wobei der Öffnungswinkel der Übergangszone vorzugsweise kleiner ist als der Öffnungswinkel des Spreizkörpers außerhalb der Übergangszone. Vorzugsweise weist der Spreizkörper zwei konische Bereiche mit unterschiedlichen Öffnungswinkeln auf, wobei einer dieser Bereiche die Übergangszone mit den Wellen bzw. Zacken enthält.

In einem Querschnitt der Übergangszone sind die Punkte der Übergangszone mit einem maximalen Abstand zu der Längsachse mit einem fiktiven Umkreis verbunden und der Mittelpunkt des Umkreises entspricht der Längsachse und/oder in einem Querschnitt der Übergangszone sind die Punkte der Übergangszone mit einem minimalen Abstand zu der Längsachse mit einem fiktiven Innkreis verbunden und der Mittelpunkt des Umkreises entspricht der Längsachse.

Die herkömmlichen, aus dem Stand der Technik bekannten Spreizkörper sind rotationssymmetrisch zu der Längsachse ausgebildet. In einer Variante ist der Spreizkörper außerhalb der Übergangszone konisch bzw. kegelstumpfförmig ausgebildet und an der Übergangszone weist der fiktiven Innkreis und/oder Umkreis einen im Wesentlichen konstanten Radius auf, d.h. die Übergangszone ist im Wesentlichen zylinderförmig. Dabei ist der Radius des fiktiven Umkreises größer als der maximale Abstand an der radialen Außenseite zu der Längsachse eines aus dem Stand der Technik bekannten Spreizkörpers. Der Spreizhülse ist bei einer Verwendung eines aus dem Stand der Technik bekannten rotationssymmetrischen Spreizkörpers aufgrund der Größe bzw. der Geometrie der Spreizhülse ein bestimmter Spreizkörper zugeordnet und der maximale Abstand dieses aus dem Stand der Technik bekannten rotationssymmetrischen Spreizkörpers ist somit kleiner als der Radius des Umkreises. Dadurch wird beim Aufspreizen des Spreizkörpers dieser bei der Verwendung des erfindungsgemäßen Spreizdübels lokal radial stärker an Punkten mit einem maximalen Abstand zu der Längsachse aufgespreizt als bei einer Verwendung eines aus dem Stand der Technik bekannten Spreizkörpers. Der Radius des Innkreises ist dabei kleiner oder entspricht im Wesentlichen, d. h. mit einer Abweichung von 10%, 5%, 3%, 2% oder 1%, dem maximalen Radius bzw. dem maximalen Abstand zu der Längsachse an dem aus dem Stand der Technik bekannten Spreizkörper. Insbesondere kann vorgesehen sein, dass sich der Radius des Umkreises um mindestens 1 % vom Radius des Innkreises unterscheidet. Dadurch wird der Spreizkörper bei einer Verwendung eines erfindungsgemäßen Spreizkörpers auch zu einem geringeren Umfang oder zum im Wesentlichen gleichen Umfang radial aufgespreizt an den Punkten mit einem minimalen Abstand zu der Längsachse.

Zweckmäßig weist der Radius der fiktiven Umkreise eine Abweichung von weniger als 20%, 10% oder 5% auf und/oder der Radius der fiktiven Innkreise weist eine Abweichung von weniger als 20%, 10% oder 5% auf.

In einer weiteren Ausführungsform umfasst das wenigstens eine Angriffsmittel ein Gewinde an dem Ankerbolzen, eine Beilagscheibe bzw. eine Auflageplatte mit einer Bohrung und eine Mutter.

Insbesondere ist das wenigstens eine Angriffsmittel an einem zweiten Endabschnitt des Ankerbolzens ausgebildet.

In einer weiteren Ausgestaltung besteht der Ankerbolzen und/oder der Spreizkörper und/oder das wenigstens eine Angriffsmittel wenigstens teilweise, insbesondere vollständig, aus Metall, z. B. Stahl.

In einer ergänzenden Ausgestaltung weist der Ankerbolzen einen Auflagering auf und der Spreizkörper stützt sich auf dem Auflagering ab. Bei einem Herausschrauben des Ankerbolzens mit den Angriffsmitteln, z. B. der Mutter, ist eine axiale Befestigung der Spreizhülse erforderlich, damit eine Aufspreizung der Spreizhülse erfolgen kann. Dies erfolgt mittels Reibschluss, z. B. dadurch, dass die Spreizhülse zusätzlich mit Vorsprüngen versehen ist.

In einer ergänzenden Variante ist die Spreizhülse bis zu einer Mutter einer Beilagscheibe geführt, d. h. liegt auf einem Angriffsmittel auf und bei einem Herausschrauben des Ankerbolzens wird die axiale Fixierung der Spreizhülse nicht durch eine Reibung zwischen der Bohrlochwandung und der Spreizhülse zur Verfügung gestellt, sondern dadurch, dass die Spreizhülse auf wenigstens einem Angriffsmittel, z. B. einer Beilagscheibe, aufliegt.

Im Nachfolgenden wird ein Ausführungsbeispiel der Erfindung unter Bezugnahme auf die beigefügten Zeichnungen näher beschrieben. Es zeigt:
- Fig. 1: eine Seitenansicht eines Spreizdübel;
- Fig. 2: einen Querschnitt A-A gemäß Fig. 1 einer Übergangszone des Spreizdübels; und
- Fig. 3: eine Seitenansicht eines weiteren Spreizdübels.

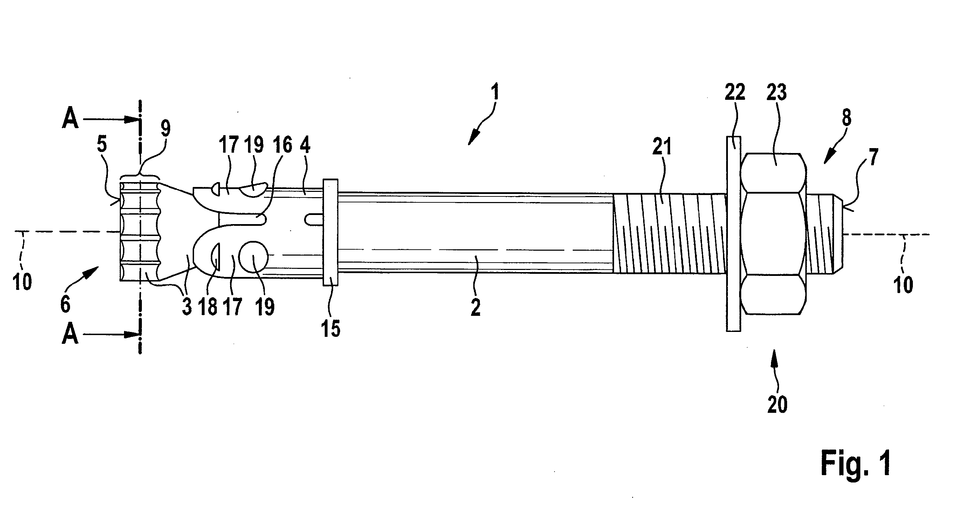

Ein in Fig. 1 dargestellter Spreizdübel 1 dient dazu, um Werkstücke an einem Bauteil zu befestigen. In dem Bauteil (nicht dargestellt), ist eine Bohrung eingearbeitet und zum Befestigen des Werkstückes ist der Spreizdübel 1 in diese Bohrung einzuführen bzw. einzuschlagen. Das Bauteil ist beispielsweise eine Betonwand oder eine Betondecke eines Gebäudes.

Der Spreizdübel 1 umfasst einen Ankerbolzen 2. Der Ankerbolzen 2 weist ein erstes Ende 5 mit einem ersten Endabschnitt 6 auf und ein zweites Ende 7 mit einem zweiten Endabschnitt 8. Beim Einführen des Spreizdübels 1 in eine Bohrlochwandung eines Bauteils, z.B. beim Einschlagen mittels eines Hammers, wird das erste Ende 5 in die Bohrlochwandung eingeführt und ein zweites Ende 7 bzw. auch ein zweiter Endabschnitt 8 des Ankerbolzens 2 bleiben außerhalb der Bohrlochwandung. Einteilig mit dem Ankerbolzen 2 ist am ersten Endabschnitt 6 ein konischer Spreizkörper 3 ausgebildet. Zwischen dem Spreizkörper 3 und einem einteilig mit dem Ankerbolzen 2 ausgebildetem Auflagering 15 ist um den Ankerbolzen 2 koaxial eine Spreizhülse 4 angeordnet. Die Spreizhülse 4 liegt auf dem Auflagering 15 auf, so dass beim Einschlagen des Spreizdübels 1 in die Bohrlochwandung und damit verbundenen Reibungskräften zwischen der Bohrlochwandung und der Spreizhülse 4 die Spreizhülse 4 aufgrund des Aufliegens auf dem Auflagering 5 nicht in Richtung zu dem zweiten Ende 7 verschoben wird auf dem Ankerbolzen 2.

Die Spreizhülse 4 weist mehrere, z. B. drei oder fünf, Längsschlitze 16 in Richtung einer Längsachse 10 des Ankerbolzens 2 auf, so dass aufgrund der axialen Längsschlitze 16 die Spreizhülse 4 mehrere Spreizsegmente 17 aufweist. An der Spreizhülse 4, insbesondere den Spreizsegmenten 17 sind erste Vorsprünge 18 und zweite Vorsprünge 19 ausgebildet. Die ersten Vorsprünge 18 sind näher an dem ersten Ende 5 des Ankerbolzens 2 ausgebildet, als die zweiten Vorsprünge 19. Die ersten und zweiten Vorsprünge 18, 19 weisen ferner auch vorzugsweise eine unterschiedliche Geometrie auf.

Am zweiten Endabschnitt 8 des Ankerbolzens 2 sind drei Angriffsmittel 20 angeordnet. Die Angriffsmittel 20 sind ein in den Ankerbolzen 2 eingearbeitetes Gewinde 21, eine Beilagscheibe 22 und eine Mutter 23. Die Mutter 23 weist ein nicht dargestelltes Innengewinde auf, welches in das Außengewinde 21 an dem Ankerbolzen 2 eingreift.

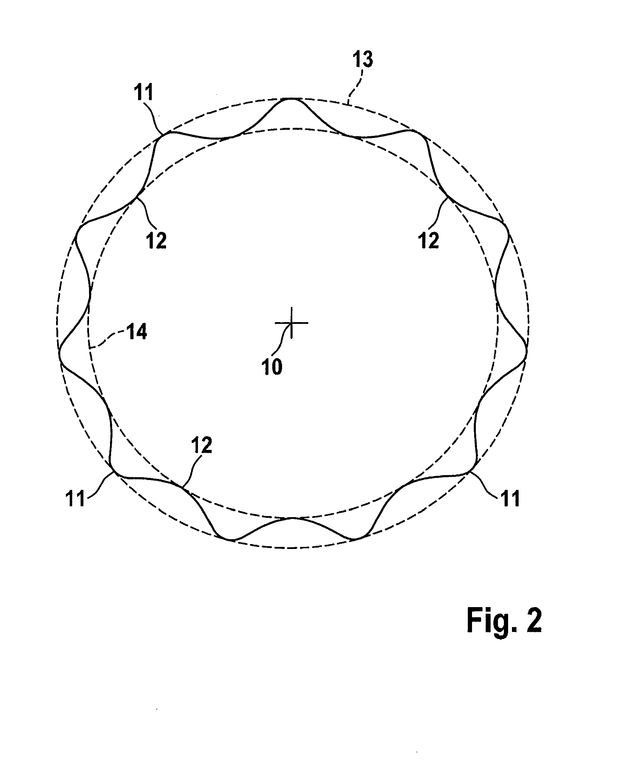

Der Spreizkörper 3 ist an seiner radialen Außenseite mit einer Übergangszone 9 versehen. Die Übergangszone 9 ist in einem Schnitt A-A gemäß Fig. 1, d. h. einem Schnitt senkrecht zu der Zeichenebene von Fig. 1 und senkrecht zu der Längsachse 10 des Ankerbolzens 2, wellenförmig mit einer Vielzahl von Wellen ausgebildet. Dadurch weist der Spreizkörper 3 an der Übergangzone 9 einen unterschiedlichen Abstand zu der Längsachse 10 auf. An den Spitzen der Wellen an der Übergangszone 9 treten somit Punkte 11 mit einem maximalen Abstand zu der Längsachse 10 auf und an den Tälern der Wellen Punkte 12 mit einem minimalen Abstand zu der Längsachse 10. Die Punkte 11 mit dem maximalen Abstand sind dabei zu einem fiktiven Umkreis 13 verbunden, welcher in Fig. 2 strichliert dargestellt ist und die Punkte 12 mit dem minimalen Abstand zu der Längsachse 10 sind zu einem in Fig. 2 strichlierten fiktiven Innkreis 14 miteinander verbunden. Der Spreizkörper 3 ist außerhalb der Übergangszone 9 konisch ausgebildet, d. h. ein Schnitt gemäß dem Schnitt A-A senkrecht zu der Zeichenebene von Fig. 1 und senkrecht zu der Längsachse 10 (nicht dargestellt) stellt somit einen Kreis dar mit zunehmenden Radius in Richtung zu dem ersten Ende 5. Die Übergangszone 9 ist im Wesentlichen zylinderförmig, d. h. vorzugsweise mit einer Abweichung von weniger als 20%, 10%, 5% oder 2%, ausgebildet unter Vernachlässigung der Wellen bzw. Zackenform, so dass bei einem Schnitt gemäß dem Schnitt A-A senkrecht zu der Zeichenebene von Fig. 1 und senkrecht zu der Längsachse 10 an der Übergangszone 9 der fiktive Um- und Innkreis 13, 14 einen konstanten Radius bei unterschiedlichen Schnitten in Richtung der Längsachse 10 aufweist.

Zur Befestigung von Werkstücken an dem Spreizdübel 1 ist der Spreizdübel 1 in ein Bohrloch bzw. eine Bohrung eines Bauteils einzuführen bzw. einzuschlagen. Nach dem Einschieben des Spreizdübels 1 in dieses Bohrloch ist das erste Ende 5 innerhalb des Bohrloches und das zweite Ende 7 außerhalb des Bohrloches angeordnet. Mittels der Angriffsmittel 20, in dem die Mutter 23 mit dem Gewinde 21 verschraubt wird, wird der Ankerbolzen 2 und damit auch der Spreizkörper 3 in axialer Richtung bezüglich der Längsachse 10 nach außen geschraubt, so dass dadurch aufgrund der axialen Fixierung der Spreizhülse 4 mit Reibungskräften zwischen der Spreizhülse 4 und der Bohrlochwandung, auch aufgrund der Vorsprünge 18, 19 die auch eine formschlüssige Verbindung ermöglichen, wird mit dem Spreizkörper 3 die Spreizhülse 4 an den Spreizsegmenten 17 radial nach außen gespreizt, so dass Reibkräfte und eine Vorspannung zwischen der Spreizhülse 4 und/oder dem Spreizkörper 3 und der Bohrlochwandung auftreten für eine axiale Befestigung des Spreizdübels 1 in dem nicht dargestellten Bohrloch des nicht dargestellten Bauteiles.

Aufgrund der wellenförmigen Übergangszone 9 an der radialen Außenseite des Spreizkörpers 3 im Bereich des ersten Endes 5, d. h. am ersten Endabschnitt 6 des Ankerbolzens 2, tritt eine unterschiedliche radiale Vorspannung bzw. Verkrallung des Spreizkörpers 3 und/oder der Spreizhülse 4 mit der Bohrlochwandung auf. Dadurch treten im Bereich der Punkte 11 mit dem maximalen Abstand zu der Längsachse 10 lokal wesentlich größere Vorspannungskräfte auf als an den Punkten 12 mit den minimalen Abständen zu der Längsachse 10. Es kommt punktuell zu einer stärkeren Verkrallung und auch formschlüssigen Verbindung zwischen der Bohrlochwandung und der Spreizhülse 4 und/oder dem Spreizkörper 3. Dadurch können auch bei schwierigen Bedingungen sehr große axiale Zugkräfte von dem Spreizdübel 1 aufgenommen werden, weil sehr große Reibkräfte von der Spreizhülse 4 und/oder dem Spreizkörper 3 aufgenommen werden können und auch eine sehr gute formschlüssige Verbindung zwischen der Spreizhülse 4 und/oder dem Spreizkörper 3 sowie der Bohrlochwandung besteht.

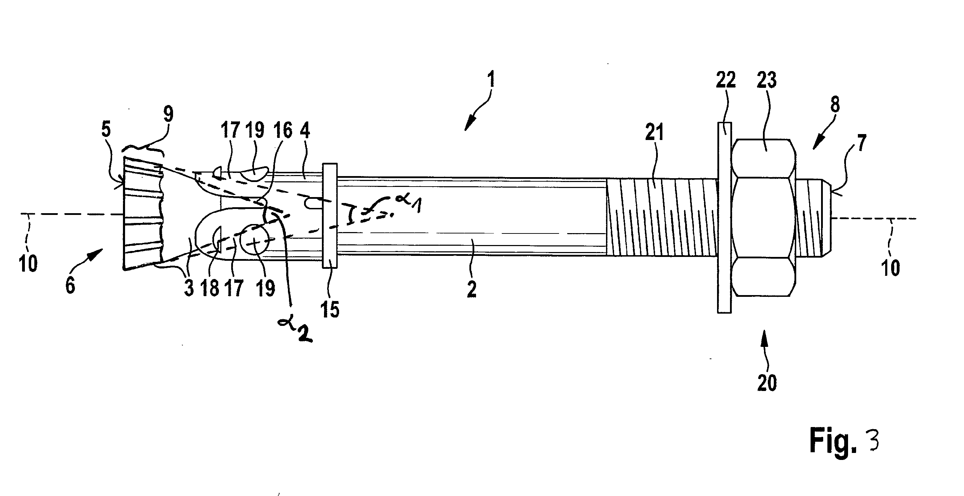

Ein weiteres Ausführungsbeispiel eines Dübels ist in Figur 3 dargestellt. Das in Figur 3 dargestellte Beispiel unterscheidet sich von dem aus Figur 1 dadurch, dass gemäß Figur 3 die Übergangszone 9 mit den Wellen bzw. Zacken konisch ausgebildet ist, wobei der Öffnungswinkel α₁ in der Überganszone 9 kleiner ist als der Öffnungswinkel α₂ außerhalb der Übergangszone 9.

Insgesamt betrachtet sind mit dem erfindungsgemäßen Spreizdübel 1 wesentliche Vorteile verbunden. Aufgrund der wellenförmigen Geometrie der Übergangszone 9 an dem Spreizkörper 3 wird in Umfangsrichtung eines Umkreises 13 bzw. eines Innkreises 14 tangential eine unterschiedliche Verspannung bzw. Verkrallung an der Bohrlochwandung bewirkt. Zudem kann die Setzenergie zum Einschlagen des Dübels gezielt reduziert werden und die Verdrehsicherung des Ankers erhöht werden. Dadurch haben unterschiedliche Größen aufgrund von Fertigungstoleranzen des Spreizkörpers 3 nur noch einen sehr geringen Einfluss auf die von dem Spreizdübel 1 übertragbaren Kräfte, so dass der Spreizkörper 3 preiswerter mit einer geringeren Fertigungsgenauigkeit und mit alternativen Herstellungsverfahren hergestellt werden kann.

## Patentansprüche

1. Spreizdübel (1), umfassend
- einen Ankerbolzen (2) mit einem Spreizkörper (3) an einem ersten Endabschnitt (6) des Ankerbolzens (2) mit einer Längsachse (10),
- wenigstens ein Angriffsmittel (20) an einem anderen zweiten Endabschnitt (8) des Ankerbolzens (2) zur Lastaufnahme, und
- eine den Ankerbolzen (2) umgebende Spreizhülse (4),
- wobei der Spreizkörper (3) an der radialen Außenseite unterschiedliche Abstände bezüglich wenigstens eines identischen Punktes an der Längsachse (10) zu der Längsachse (10) an einer Übergangszone (9) aufweist, so dass an der Übergangszone (9) Punkte (11) mit einem maximalen Abstand zu der Längsachse (10) und Punkte (12) mit einem minimalen Abstand zu der Längsachse (10) auftreten,
**dadurch gekennzeichnet,**
- **dass** die Spreizhülse (4) von zumindest einem Teil der Punkte (11) mit einem maximalen Abstand zu der Längsachse (10) radial beaufschlagbar ist.

2. Spreizdübel nach Anspruch 1,
**dadurch gekennzeichnet, dass**
zumindest die Übergangszone (9) wellen- oder zackenförmig, z. B. mit wenigstens 3, 4 oder 7 Wellen oder Zacken, ausgebildet ist, wobei vorzugsweise die Wellen an ihren radial außenliegenden Wellenbergen durch Radien abgerundet sind,
und/oder
sich die Abstände bezüglich des wenigstens einen identischen Punktes zu der Längsachse (10) um wenigstens 1% unterscheiden.

3. Spreizdübel nach Anspruch 1 oder 2,
**dadurch gekennzeichnet, dass**
der Spreizkörper (3), insbesondere außerhalb der Übergangszone (9), eine konische Geometrie aufweist.

4. Spreizdübel nach einem der vorstehenden Ansprüche,
**dadurch gekennzeichnet, dass**
die Übergangszone (9) im Wesentlichen zylinderförmig ausgebildet ist und eine Längsachse (10) des Zylinders koaxial zu der Längsachse (10) des Ankerbolzens (2) ausgerichtet ist oder
dass die Übergangszone (9) im Wesentlichen konisch ausgebildet ist, wobei der Öffnungswinkel (α₁) der Übergangszone (9) vorzugsweise kleiner ist als der Öffnungswinkel (α₂) des Spreizkörpers (3) außerhalb der Übergangszone (9).

5. Spreizdübel nach einem oder mehreren der vorhergehenden Ansprüche,
**dadurch gekennzeichnet, dass**
in einem Querschnitt der Übergangszone (9) die Punkte der Übergangszone (9) mit einem maximalen Abstand zu der Längsachse mit einem fiktiven Umkreis (13) verbunden sind und der Mittelpunkt des Umkreises der Längsachse (10) entspricht und/oder
in einem Querschnitt der Übergangszone (9) die Punkte der Übergangszone (9) mit einem minimalen Abstand zu der Längsachse (10) mit einem fiktiven Innkreis (14) verbunden sind und der Mittelpunkt des Umkreises der Längsachse (10) entspricht.

6. Spreizdübel nach Anspruch 5,
**dadurch gekennzeichnet, dass**
sich der Radius des Umkreises (13) um mindestens 1% vom Radius des Innkreises (14) unterscheidet.

7. Spreizdübel nach Anspruch 5 oder 6,
**dadurch gekennzeichnet, dass**
der Spreizkörper (3) außerhalb der Übergangszone (9) konisch ausgebildet ist und an der Übergangszone (9) weist der fiktive Innkreis (14) und/oder Umkreis (13) einen im Wesentlichen konstanten Radius auf.

8. Spreizdübel nach Anspruch 7,
**dadurch gekennzeichnet, dass**
der Radius der fiktiven Umkreise (13) eine Abweichung von weniger als 10% aufweist
und/oder
der Radius der fiktiven Innkreise (14) eine Abweichung von weniger als 10% aufweist.

9. Spreizdübel nach einem oder mehreren der vorhergehenden Ansprüche,
**dadurch gekennzeichnet, dass**
das wenigstens eine Angriffsmittel (20) ein Gewinde (21) an dem Ankerbolzen (2), eine Beilagscheibe (22) und eine Mutter (23) umfasst.

10. Spreizdübel nach einem oder mehreren der vorhergehenden
Ansprüche,
**dadurch gekennzeichnet, dass**
das wenigsten eine Angriffsmittel (20) an einem zweiten Endabschnitt (8) des Ankerbolzens (2) ausgebildet sind.

11. Spreizdübel nach einem oder mehreren der vorhergehenden
Ansprüche,
**dadurch gekennzeichnet, dass**
der Ankerbolzen (2) und/oder der Spreizkörper (3) und/oder das wenigstens eine Angriffsmittel (20) wenigstens teilweise, insbesondere vollständig, aus Metall, z. B. Stahl, besteht.

## Claims

1. Expansion anchor (1), comprising
- an anchor bolt (2) having an expansion body (3) on a first end section (6) of the anchor bolt (2) and having a longitudinal axis (10),
- at least one application means (20) on another, second end section (8) of the anchor bolt (2) for absorbing load, and
- an expansion sleeve (4) surrounding the anchor bolt (2),
- the expansion body (3) having on its radially outer side, in a transition zone (9), varying distances from the longitudinal axis (10) with respect to at least one identical point on the longitudinal axis (10), so that points (11) having a maximum distance from the longitudinal axis (10) and points (12) having a minimum distance from the longitudinal axis (10) occur in the transition zone (9),
**characterised in that**
the expansion sleeve (4) can be impinged upon radially by at least some of the points (11) having a maximum distance from the longitudinal axis (10).

2. Expansion anchor according to Claim 1,
**characterised in that**
at least the transition zone (9) has an undulating or toothed configuration, for example with at least 3, 4 or 7 undulations or teeth, the undulations preferably being rounded by radii on the radially outer wave crests, and/or
the distances from the longitudinal axis (10) with respect to the at least one identical point differ by at least 1%.

3. Expansion anchor according to Claim 1 or 2,
**characterised in that**
the expansion body (3) has a conical geometry, in particular outside the transition zone (9).

4. Expansion anchor according to any one of the preceding claims,
**characterised in that**
the transition zone (9) has a substantially cylindrical configuration and a longitudinal axis (10) of the cylinder is oriented coaxially with the longitudinal axis (10) of the anchor bolt (2), or
**in that** the transition zone (9) as a substantially conical configuration, the included angle (α₁) of the transition zone (9) preferably being smaller than the included angle (α₂) of the expansion body (3) outside the transition zone (9).

5. Expansion anchor according to one or more of the preceding claims,
**characterised in that**
in a cross section of the transition zone (9) the points of the transition zone (9) having a maximum distance from the longitudinal axis are connected by an imaginary outer circumcircle (13) and the centre of the outer circumcircle coincides with the longitudinal axis (10),
and/or
in a cross section of the transition zone (9) the points of the transition zone (9) having a minimum distance from the longitudinal axis (10) are connected by an imaginary inner circumcircle (14) and the centre of the inner circumcircle coincides with the longitudinal axis (10).

6. Expansion anchor according to Claim 5,
**characterised in that**
the radius of the outer circumcircle (13) differs from the radius of the inner circumcircle (14) by at least 1%.

7. Expansion anchor according to Claim 5 or 6,
**characterised in that**
the expansion body (3) has a conical configuration outside the transition zone (9), and the imaginary inner circumcircle (14) and/or outer circumcircle (13) has/have a substantially constant radius in the transition zone (9).

8. Expansion anchor according to Claim 7,
**characterised in that**
the radius of the imaginary outer circumcircle (13) has a divergence of less than 10%
and/or
the radius of the imaginary inner circumcircle (14) has a divergence of less than 10%.

9. Expansion anchor according to one or more of the preceding claims, **characterised in that**
the at least one application means (20) comprises a thread (21) on the anchor bolt (2), a washer (22) and a nut (23).

10. Expansion anchor according to one or more of the preceding claims,
**characterised in that**
at least one application means (20) is/are formed on a second end section (8) of the anchor bolt (2).

11. Expansion anchor according to one or more of the preceding claims,
**characterised in that**
the anchor bolt (2) and/or the expansion body (3) and/or the at least one application means (20) consist at least partially, in particular completely, of metal, for example steel.

## Revendications

1. Cheville à expansion (1), comportant :
- un boulon d'ancrage (2) ayant un corps d'expansion (3) à une première partie d'extrémité (6) du boulon d'ancrage (2) et ayant un axe longitudinal (10),
- au moins un moyen d'application (20) à une autre seconde partie d'extrémité (8) du boulon d'ancrage (2) pour la réception d'une charge, et
- une douille d'expansion (4) entourant le boulon d'ancrage (2),
- dans laquelle le corps d'expansion (3) présente dans une zone de transition (9), sur le côté extérieur radial, différentes distances par rapport à au moins un point identique sur l'axe longitudinal (10) jusqu'à l'axe longitudinal (10), de telle sorte que dans la zone de transition (9), des points (11) sont situés à une distance maximale par rapport à l'axe longitudinal (10) et des points (12) sont situés à une distance minimale par rapport à l'axe longitudinal (10),
**caractérisée en ce que**
- la douille d'expansion (4) peut être sollicitée radialement par au moins une partie des points (11) à une distance maximale par rapport à l'axe longitudinal (10) .

2. Cheville d'expansion selon la revendication 1, **caractérisée en ce qu'**au moins la zone de transition (9) est formée de manière ondulée ou dentelée, par exemple avec au moins 3, 4 ou 7 ondulations ou dents, dans laquelle les ondulations sont de préférence arrondies par des rayons à leurs sommets d'ondulation situés radialement vers l'extérieur,
et/ou
les distances concernant le au moins un point identique par rapport à l'axe longitudinal (10) diffèrent d'au moins 1 %.

3. Douille d'expansion selon la revendication 1 ou 2, **caractérisée en ce que** le corps d'expansion (3) a une géométrie conique, en particulier à l'extérieur de la zone de transition (9).

4. Douille d'expansion selon l'une des revendications précédentes, **caractérisée en ce que** la zone de transition (9) est formée de manière sensiblement cylindrique et un axe longitudinal (10) du cylindre est orienté coaxialement à l'axe longitudinal (10) du boulon d'ancrage (2), ou **en ce que** la zone de transition (9) est formée de manière sensiblement conique, dans laquelle l'angle d'ouverture (α₁) de la zone de transition (9) est de préférence plus petit que l'angle d'ouverture (α₂) du corps d'expansion (3) à l'extérieur de la zone de transition (9).

5. Douille d'expansion selon une ou plusieurs des revendications précédentes, **caractérisée en ce que** dans une section transversale de la zone de transition (9), les points de la zone de transition (9) à une distance maximale par rapport à l'axe longitudinal sont reliés par un cercle circonscrit fictif (13) et le centre du cercle circonscrit correspond à l'axe longitudinal (10),
et/ou
dans une section transversale de la zone de transition (9), les points de la zone de transition (9) avec une distance minimale par rapport à l'axe longitudinal (10) sont reliés par un cercle inscrit fictif (14) et le centre du cercle inscrit correspond à l'axe longitudinal (10).

6. Douille d'expansion selon la revendication 5, **caractérisée en ce que** le rayon du cercle circonscrit (13) diffère du rayon du cercle inscrit (14) d'au moins 1 %.

7. Douille d'expansion selon la revendication 5 ou 6, **caractérisée en ce que** le corps d'expansion (3) est formé de manière conique à l'extérieur de la zone de transition (9) et le cercle inscrit fictif (14) et/ou le cercle circonscrit (13) a un rayon sensiblement constant dans la zone de transition (9).

8. Douille d'expansion selon la revendication 7, **caractérisée en ce que** le rayon du cercle circonscrit fictif (13) présente un écart de moins de 10 % et/ou le rayon du cercle inscrit fictif (14) présente un écart de moins de 10 %.

9. Douille d'expansion selon une ou plusieurs des revendications précédentes, **caractérisée en ce que** les au moins un moyen d'application (20) incluent un filetage (21) sur le boulon d'ancrage (2), une rondelle de calage (22) et un écrou (23).

10. Douille d'expansion selon une ou plusieurs des revendications précédentes, **caractérisée en ce que** le au moins un moyen d'application (20) est formé à une seconde partie d'extrémité (8) du boulon d'ancrage (2).

11. Douille d'expansion selon une ou plusieurs des revendications précédentes, **caractérisée en ce que** le boulon d'ancrage (2) et/ou le corps d'expansion (3) et/ou le au moins un moyen d'application (20) est constitué au moins partiellement, en particulier entièrement, de métal, par exemple d'acier.
